# EUROPEAN PATENT SPECIFICATION

(11) **EP 1 171 967 B1**
(45) Date of publication and mention of the grant of the patent: **12.11.2003**
(21) Application number: 00914172.2
(22) Date of filing: 30.03.2000
(51) Int. Cl.: H04B 10/08

(54) **METHOD AND MONITORING DEVICE FOR MONITORING THE QUALITY OF DATA TRANSMISSION OVER ANALOG LINES**
VERFAHREN UND VORRICHTUNG ZUR QUALITÄTSÜBERWACHUNG VON DATENÜBERTRAGUNG ÜBER ANALOGE LEITUNGEN
PROCEDE ET DISPOSITIF DE CONTROLE DE LA QUALITE DE LA TRANSMISSION DE DONNEES SUR DES LIGNE ANALOGIQUES

(30) Priority: 20.04.1999 DE 19917751
(43) Date of publication of application: 16.01.2002
(73) Proprietor: Nokia Corporation, 02150 Espoo (FI)
(72) Inventor: DICKHAUS, Bertold, D-40625 Düsseldorf (DE)
(74) Representative: Schippan, Ralph, Dr.-Ing.
(86) International application number: PCT/EP00/02817
(87) International publication number: WO 00/064077

(56) References cited:
- EP-A- 0 812 078
- EP-A- 0 835 005

## Description

The invention relates to a method for monitoring the quality of data transmission over analog lines, in particular optical lines, with the data being transmitted as signals by using at least one wavelength and with at least one wavelength to be monitored on a monitoring path. The invention also relates to a monitoring device for such monitoring.

Analog lines are for example used in the form of optical fibre cables in optical telecommunications networks for data transmission whereby it is possible to send various signals at various wavelengths, in parallel, on each optical line formed by the optical fibre cables. To this purpose, the trunk parts are composed by means of wavelength-multiplex technology, with the signals generated being considered to be analog to configure the network as transparently as possible.

EP 0 812 078 A2 discloses such a Wave-Division Multiplex (WDM) communication system with an optical repeater to amplify the optical signals and thus to allow for long-haul and large-capacity multi-hop transmission. To control the operation of the optical amplifier within the repeater, the number of wavelengths used in the WDM system is determined as supervisory signal at the transmitter, electro-optically (E/O) converted and transmitted to the repeater on a separate supervisory wavelength. The repeater recovers the supervisory information by de-coupling of the supervisory wavelength and O/E conversion, and adapts the amplification of the amplifier to the current number of wavelengths in the WDM system.

However, data transmission at the high reliability demanded nowadays, further requires the ability to determine whether the signals transmitted are of adequate quality or whether they have to be classified as faulty.

In EP 0 835 005 A2, an optical WDM transmission system with optical repeaters is disclosed. To monitor the communication system, information on the active wavelengths, the corresponding transmission directions (up/downstream), transmission line identification numbers (required for routing), etc. are produced at each repeater by regenerating the electrical signals from the optical signals. This supervisory information is gathered in an information frame structure and, after E/O conversion, is coupled to the fibre cable on a separate supervisory wavelength. The supervisory information is received by the optical terminal equipment and analyzed to improve the transmission quality of the WDM system.

This monitoring technique represents a rather complicated approach, because at each repeater, on the one hand decoupling, de-multiplexing and O/E conversion of the signals associated to each wavelength is required to gather monitoring information, and on the other hand, construction, E/O conversion, multiplexing and coupling of the supervisory signal is necessary to sent the supervisory information to the terminal equipment. Furthermore, analog transmission can no longer be considered to be transparent, because the signal format (ATM, SDH) has to be known at each repeater when gathering the supervisory information and constructing the supervisory signal.

It is thus the object of the invention to provide a method and a monitoring device which offer a simple and reliable way of evaluating the quality of signals transmitted over analog lines.

According to the invention, firstly this object is met by a method for monitoring the quality of data transmission over analog lines, in particular optical lines with the data being transmitted as signals, by using at least one wavelength and with at least one wavelength on a monitoring path to be monitored, with the method comprising the following steps:
- Decoupling a fraction of the signals of each of the wavelengths to be monitored, at the starting point of a monitoring path;
- Forming a monitoring signal which depicts the sum of the intensities of the decoupled signals;
- Transmitting the monitoring signal formed, with an additional wavelength;
- At at least one monitoring point of the monitoring path provided for this purpose, renewed decoupling of a fraction of the signals with the wavelengths to be monitored as well as decoupling at least a fraction of the monitoring signal; and
- Evaluating the signals decoupled at the monitoring point in respect of any change between the sum of the intensities of the signals with the wavelengths to be monitored, at the starting point of the monitoring path and at the monitoring point, of which there is at least one.

Secondly the object of the invention is met by a monitoring device for monitoring the quality of data transmission over analog lines, in particular optical lines such as optical fibre cables, by way of which the data is transmittable as signals by using at least one wavelength, of which at least one is to be monitored on a monitoring path. The object is met by:
- A first decoupling device for decoupling fractions of the signals with the wavelengths to be monitored from the analog line;
- A generator for generating a monitoring signal with an additional wavelength from the intensities of the decoupled fractions of the signals;
- A coupling device for coupling the generated monitoring signal to the analog line;
- A second decoupling device for decoupling fractions of the signals with the wavelengths to be monitored as well as at least a fraction of the monitoring signal from the analog line at a monitoring point; and
- An evaluation unit for evaluating the signals decoupled at the monitoring point in respect of any change between the sum of the intensities of the signals with the wavelengths to be monitored at the starting point of the monitoring path and at the monitoring point, of which there is at least one.

The method according to the invention and the device according to the invention provides a simple and reliable possibility for monitoring, on specific transmission paths, the quality of signals transmitted in optical networks.

According to the invention, on the monitoring path additionally a monitoring signal with a wavelength exclusively provided for this is transmitted, with the monitoring signal continuously depicting the overall intensity of the signals with the wavelengths to be monitored. In this way the network operator at the end of the monitoring path is provided with information which can be used to determine whether there is a difference between the overall intensity of the wavelengths to be monitored, at the start of the monitoring path (taking into account the decoupled parts) and the overall intensity of the wavelengths to be monitored, at the end of the monitoring path. If a change in overall intensity on the monitoring path is detected, the network operator knows that the transmission on one of the monitored wavelengths is not faultless, and suitable measures can be introduced. Introducing such measures can of course also consist of providing an automatic device for cases of deviation.

In principle, the method according to the invention and the monitoring device according to the invention can be used for any analog data transmission but above all telecommunications networks with optical transmission lines are the intended field of application.

Advantageously the monitoring signal is formed such that it is equal to, or proportional to, the sum of the intensities of the signals decoupled at the starting point. By monitoring to what extent the monitoring signal which is transmitted on an additional wavelength is equal to, or proportional to, a sum formed at the monitoring point of fractions of the signals, decoupled at this point, of the wavelength to be monitored, information then exists concerning the quality of data transmission on the monitoring path. Only if the sum is identical or proportional, can it be assumed that the signals were transmitted without fault on the monitoring path.

According to another advantageous way of generating the monitoring signal, the monitoring signal provides the complement to the sum of the intensities of the signals decoupled at the starting point, in respect of a specified value. It is suitable if this specified value equals the sum of the maximum attainable intensity of the individual signals with the wavelengths to be monitored.

If another value is selected, then this value must exceed the sum of the maximum attainable intensities. In this case it is then only necessary in the evaluation unit to form the sum of all signals decoupled at the monitoring point, including the monitoring signal, and to monitor this sum for constancy.

After reducing the intensity of the signals transmitted on the optical line, by double decoupling of fractions, said signals are advantageously amplified. This will prevent the intensity of the signals dropping too low, in particular after passing several monitoring paths.

In the case of a large number of wavelengths to be monitored it is furthermore advantageous if the wavelengths are divided into groups, with a monitoring signal of its own being formed for each group, and for evaluation, to transmit the monitoring signal to a monitoring point on a separate wavelength. With respective configuration of the monitoring device according to the invention, in this case each group can be associated with a generator of its own and an evaluation unit of its own. In this way it is possible not only to obtain information concerning the quality of the transmission of all the signals transmitted on the monitoring path, but also concerning the transmission quality in respect of specific wavelengths.

If a relevant deviation is detected between the signal intensities of the signals with the wavelengths to be monitored at the starting point of the transmission path and the monitoring point, preferably automatic notification will take place. A notification unit which is connected to the evaluation unit may be provided for issuing such notification.

A particularly compact embodiment of the monitoring device according to the invention is achieved for the use of monitoring optical lines of a telecommunications network, in that the decoupling devices and the coupling device, and possibly also the generator of the monitoring signal and the evaluation unit are integrated in optical nodes of the network which nodes limit the respective transmission paths.

To generate the monitoring signal, the generator requires a certain time which results in the monitoring signal which depicts the sum of the intensities of the signals of the wavelengths to be monitored being slightly shifted in time when compared to the signals decoupled at the monitoring point, of the wavelengths to be monitored. An advantageous embodiment of the monitoring device according to the invention therefore provides delay elements which, for the purpose of compensating for the processing time in the generator, delay the signals of the wavelengths to be monitored, at the monitoring point, before they are used for evaluation in the evaluation unit. If the delay time is set to the time required by the generator for generating the monitoring signal, then, during evaluation, after the delay, the temporal position of the monitoring signal agrees with the signals of the wavelengths to be monitored, which signals are decoupled at the monitoring point. Thus such delay elements provide a simple way of achieving high precision of evaluation.

Below, the invention is explained in more detail by means of an exemplary embodiment, with reference to drawings, as follows:
- Fig. 1:: shows a monitoring path in an optical network comprising an exemplary embodiment of a monitoring device according to the invention; and
- Fig. 2:: shows a curve representing an intermediate step of generating a monitoring signal according to the invention.

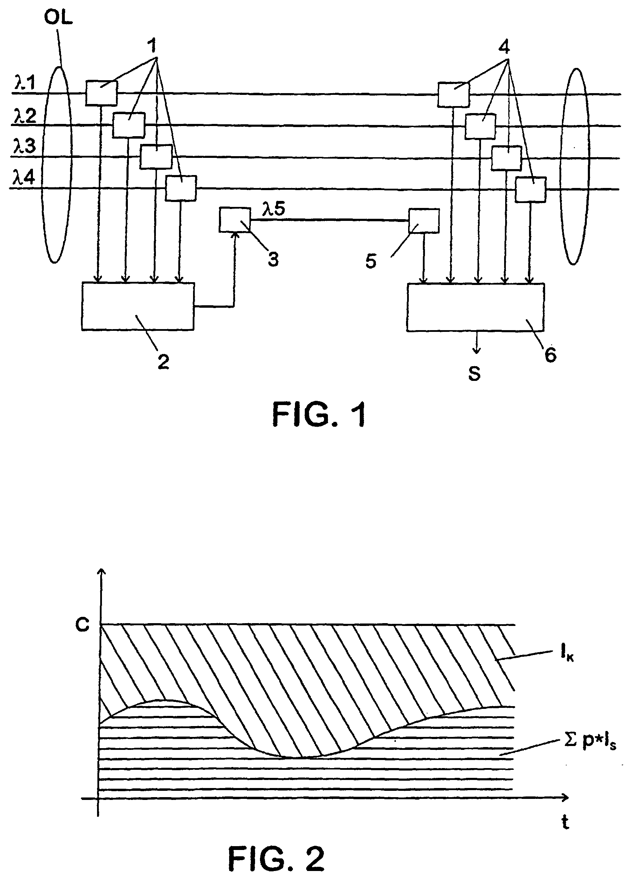

Figure 1 shows a section of an optical fibre cable which is used as an optical waveguide OL. The optical waveguide OL forms part of an optical network which is used for data transmission within a telecommunications network.
For data transmission, various signals are transmitted simultaneously, using several wavelengths. On that part of the optical waveguide OL which is shown, the quality of the signal transmission with wavelengths λ1 - λ4 is now to be monitored.

In the left area, the optical waveguide OL comprises a first decoupling device. For all wavelengths λ1 - λ4 to be monitored, the decoupling device comprises decoupling means 1 for decoupling a fraction p of the signal with the respective wavelengths from the optical waveguide OL. The position of this first decoupling device determines the starting point of the monitoring path on which monitoring the quality of the signal transmission is to take place.

The output ports of the decoupling device 1 are connected to a generator 2. The generator 2 in turn has access to a coupling device 3, also connected to the optical waveguide OL in the area of the starting point of the monitoring path, for coupling a signal of a specified wavelength λ5 to the optical waveguide OL.

The end of the monitoring path is defined by a second decoupling device which also comprises decoupling means 4 for all wavelengths λ1 - λ4 to be monitored, for decoupling a fraction p of the signal with the respective wavelengths from the optical waveguide OL. Furthermore, the second decoupling device comprises decoupling means 5 for decoupling a fraction p of a signal with wavelength λ5.

The output ports of the second decoupling device are connected to an evaluation device 6. Connection of the evaluation device 6 to further elements such as a display device or a notification device is not shown.

Below, the function of the described embodiment of a monitoring device according to the invention is described.

In each instance, by means of the decoupling device 1, a fraction p of the signals with the wavelengths λ1- λ4 is decoupled from the signals with intensities I_{S} (with s = 1 - 4) transmitted on the optical waveguide OL.

Subsequently, the decoupled signals with intensity p*I_{S} are supplied to the generator 2. The generator 2 then forms the sum Σp*I_{S} of the intensities of the signals received. For this sum, the complement I_{K} in relation to a constant value C is formed, i.e. I_{K} = C - Σp*I_{S}. The constant C is equal to the product of fraction p, number of the wavelengths to be monitored and maximum value of the intensity of the signal of a wavelength, C = p*4*Iₘₐₓ. Figure 2 shows an example over time of a signal of the formed sum of the intensity of the decoupled signals as well as the complement formed in relation to it.

By multiplying the complement with (p-1)/p, matching to the signal intensities (1-p)*Iₛ of the signals with the wavelengths λ1 - λ4 to be monitored, takes place which wavelengths λ1 - λ4, due to decoupling at the first decoupling device, are reduced by the fraction p in comparison to the original signal intensities I_{S}. Subsequently, from the signal obtained by multiplication, the generator 2 generates a monitoring signal with a wavelength λ5 which in the optical waveguide OL up to this point is not used for signal transmission, and an intensity (1-p)*(4*Iₘₐₓ-ΣI_{S}). Thus the monitoring signal is a depiction of the sum of the intensities of the transmitted signals from which, with value C and fraction p with which the signals are being decoupled being known, the sum can clearly be determined. The monitoring signal is merely slightly shifted in time in relation to the signals of the wavelengths λ1 - λ4 to be monitored, because generator 2 requires a certain time for processing the received signals for generating a monitoring signal.

The monitoring signal with wavelength λ5 is now coupled to the optical waveguide OL via coupling device 3.

Until the end of the monitoring path, the monitoring signal is additionally transmitted in parallel to the data signals.

At the monitoring point, via decoupling means 4 of the second decoupling device, again decoupling of a fraction p of the signals of the wavelengths λ1 - λ4 takes place. Likewise, at this point a fraction p of the monitoring signal with wavelength λ5 is decoupled via the decoupling means 5 of the second decoupling device.

The five decoupled signals are provided to the evaluation unit 6. Next, the four decoupled signals of the wavelengths to be monitored are delayed via delay elements contained in the evaluation unit 6 by exactly that time which was required in the generator for generating the monitoring signal, so that subsequently there is a temporal correspondence between the decoupled fraction of the monitoring signals and the decoupled fractions of the signals to be monitored.

After this, the evaluation unit 6 adds up the intensities of the four delayed signals and those of the decoupled fraction of the monitoring signal. In the case of error-free transmission, the resulting sum should be constant because the monitoring signal represents the complement to the sum of the other transmitted signals and because from all signals the same fraction p was decoupled at the second decoupling device 4, 5. The expected value of the sum is p*(1-p)*4*Iₘₐₓ. If there is any deviation from this value, this means that at least in respect of one of the wavelengths, faulty transmission on the monitoring path has occurred.

Information S which indicates deviation or non-deviation of the sum formed in the evaluation unit from the constant value, is forwarded to a display/notification unit, providing the network operator with an overview of the quality of transmission on the monitoring path. As an alternative or in addition, the information S can also be forwarded for automatic initiation of measures due to faulty transmissions.

## Claims

1. A method for monitoring the quality of data transmission over analog lines, in particular optical lines (OL), with the data being transmitted as signals by using at least one wavelength (λ1 - λ4) and with at least one wavelength (λ1 - λ4) to be monitored on a monitoring path, said method comprising the following steps:
- Decoupling (1) a fraction of the signals of each of the wavelengths (λ1 - λ4) to be monitored, at the starting point of a monitoring path;
- Forming (2) a monitoring signal which depicts the sum of the intensities of the decoupled signals;
- Transmitting (3) the monitoring signal formed, with an additional wavelength (λ5);
- At at least one monitoring point of the monitoring path provided for this purpose, renewed decoupling (4) of a fraction of the signals with the wavelengths (λ1 - λ4) to be monitored as well as decoupling (5) at least a fraction of the monitoring signal; and
- Evaluating (6) the signals decoupled at the monitoring point in respect of any change between the sum of the intensities of the signals with the wavelengths (λ1 - λ4) to be monitored, at the starting point of the monitoring path and at the monitoring point, of which there is at least one.

2. A method according to claim 1,
**characterised in that**
the monitoring signal is formed such that it is equal to, or proportional to, the sum (Σp*I_{S}) of the intensities of the decoupled fractions of the signals with the wavelengths (λ1 - λ4) to be monitored, and that for evaluation it is monitored to what extent the monitoring signal which is transmitted on an additional wavelength (λ5) is equal to, or proportional to, a sum formed at the monitoring point, of the intensities of fractions of the signals, decoupled at this point, with the wavelengths (λ1 - λ4) to be monitored.

3. A method according to claim 1,
**characterised in that**
the monitoring signal is formed from the complement (I_{K}) in relation to a specified value (C) to the sum (Σp*I_{S}) of the intensities of the decoupled fractions of the signals with the wavelengths (λ1 - λ4) to be monitored, and that for evaluation it is monitored to what extent the sum of the intensity of the monitoring signal which at the monitoring point is at least as a fraction decoupled and the intensities of the fractions, decoupled at the monitoring point, of the signals with the wavelengths (λ1 - λ4) to be monitored, is constant.

4. A method according to one of the preceding claims,
**characterised in that**
the signals transmitted on the analog line (OL) are amplified after a reduction in the intensity by decoupling fractions.

5. A method according to one of the preceding claims,
**characterised in that**
the wavelengths to be monitored are divided into groups, with a monitoring signal of its own being formed for each group, with said monitoring signal, for evaluation at a monitoring point, being transmitted on a separate wavelength.

6. A method according to one of the preceding claims,
**characterised in that** notification occurs if during evaluation a relevant deviation is detected.

7. A device for monitoring the quality of data transmission over analog lines, in particular optical lines (OL) made of optical fibre cables, with the data being transmitted as signals through said analog lines by using at least one wavelength (λ1 - λ4) and with at least one wavelength to be monitored on a monitoring path, comprising
- A first decoupling device (1) for decoupling fractions of the signals with the wavelengths (λ1 - λ4) to be monitored from the analog line (OL);
- A generator (2) for generating a monitoring signal with an additional wavelength (λ5) from the intensities of the decoupled fractions of the signals;
- A coupling device (3) for coupling the generated monitoring signal to the analog line (OL);
- A second decoupling device (4, 5) for decoupling fractions of the signals with the wavelengths (λ1 - λ4) to be monitored, as well as at least a fraction of the monitoring signal from the analog line (OL) at a monitoring point; and
- An evaluation unit (6) for evaluating the signals decoupled at the monitoring point in respect of any change between the sum of the intensities of the signals with the wavelengths (λ1 - λ4) to be monitored, at the starting point of the monitoring path and at the monitoring point, of which there is at least one.

8. A monitoring device according to claim 7
**characterised in that**
the analog lines are optical lines of a telecommunications network and that the decoupling devices (1, 4, 5) and the coupling device (3) are integrated in optical nodes of the telecommunications network.

9. A monitoring device according to one of claims 7 - 8,
**characterised in that**
the analog lines are optical lines of a telecommunications network and that the generator (2) of the monitoring signal and the evaluation unit (6) are integrated in optical nodes of the telecommunications network.

10. A monitoring device according to one of claims 7 - 9,
**characterised in that**
delay elements which are suitable for compensating the processing time in the generator (2) delay the signals of the wavelengths (λ1 - λ4) to be monitored, which signals are decoupled at the monitoring point, before they are used for evaluation in the evaluation unit (6).

11. A monitoring device according to one of claims 7 - 10,
**characterised in that**
the evaluation unit (6) is connected to a notification unit for issuing information in cases where relevant deviation of the sums is detected during evaluation.

12. A monitoring device according to one of claims 7 - 11
**characterised by**
a multiple number of generators and evaluation units of which one generator and one evaluation unit each is associated with a group of wavelengths.

## Patentansprüche

1. Verfahren zur Überwachung der Qualität der Datenübertragung über analoge Leitungen, insbesondere optische Leitungen (OL), wobei die Daten als Signale unter Verwendung mindestens einer Wellenlänge (λ1-λ4) übertragen werden und mindestens eine Wellenlänge (λ1-λ4) auf einer Überwachungsstrecke überwacht werden soll, das die folgenden Schritte umfaßt:
- Auskoppeln (1) eines Bruchteils der Signale jeder der zu überwachenden Wellenlängen (λ1-λ4) am Anfangspunkt einer Überwachungsstrecke,
- Bilden (2) eines die Summe der Intensitäten der ausgekoppelten Signale abbildendes Überwachungssignals,
- Übertragen (3) des gebildeten Überwachungssignals mit einer zusätzlichen Wellenlänge (λ5),
- an mindestens einem dafür vorgesehenen Überwachungspunkt der Überwachungsstrecke erneutes Auskoppeln (4) eines Bruchteils der Signale mit den zu überwachenden Wellenlängen (λ1-λ4) sowie Auskoppeln (5) mindestens eines Bruchteils des Überwachungssignals, und
- Auswerten (6) der am Überwachungspunkt ausgekoppelten Signale bezüglich einer Änderung zwischen der Summe der Intensitäten der Signale mit den zu überwachenden Wellenlängen (λ1-λ4) am Anfangspunkt der Überwachungsstrecke und an dem mindestens einen Überwachungspunkt.

2. Verfahren nach Anspruch 1,
**dadurch gekennzeichnet,**
**daß** das Überwachungssignal derart gebildet wird, daß es gleich oder proportional der Summe (Σp*I_{S}) der Intensitäten der ausgekoppelten Bruchteile der Signale mit den zu überwachenden Wellenlängen (λ1-λ4) ist, und daß für die Auswertung überprüft wird, inwieweit das auf einer zusätzlichen Wellenlänge (λ5) übertragene Überwachungssignal gleich bzw. proportional zu einer am Überwachungspunkt gebildeten Summe der Intensitäten von dort ausgekoppelten Bruchteilen der Signale mit den zu überwachenden Wellenlängen (λ1-λ4) ist.

3. Verfahren nach Anspruch 1,
**dadurch gekennzeichnet,**
**daß** das Überwachungssignal aus dem Komplement (Iₖ) bezüglich eines vorgegebenen Wertes (C) zu der Summe (Σp*I_{S}) der Intensitäten der ausgekoppelten Bruchteile der Signale mit den zu überwachenden Wellenlängen (λ1-λ4) gebildet wird und daß für die Auswertung überprüft wird, inwieweit die Summe aus der Intensität des am Überwachungspunkt mindestens als Bruchteil ausgekoppelten Überwachungssignals und den Intensitäten der am Überwachungspunkt ausgekoppelten Bruchteile der Signale mit den zu überwachenden Wellenlängen (λ1-λ4) konstant ist.

4. Verfahren nach einem der voranstehenden Ansprüche,
**dadurch gekennzeichnet,**
**daß** die auf der analogen Leitung (OL) übertragenen Signale nach einer Reduzierung der Intensität durch Auskoppeln von Bruchteilen wieder verstärkt werden.

5. Verfahren nach einem der voranstehenden Ansprüche,
**dadurch gekennzeichnet,**
**daß** die zu überwachenden Wellenlängen in Gruppen eingeteilt werden, für die jeweils ein eigenes Überwachungssignal gebildet wird, das für die Auswertung an einem Überwachungspunkt mit einer gesonderten Wellenlänge übertragen wird.

6. Verfahren nach einem der voranstehenden Ansprüche,
**dadurch gekennzeichnet,**
**daß**, falls bei der Auswertung eine relevante Abweichung festgestellt wird, eine Benachrichtigung erfolgt.

7. Überwachungsvorrichtung für die Überwachung der Qualität der Datenübertragung über analoge Leitungen, insbesondere optische Leitungen (OL) aus Glasfaserkabeln, über die die Daten als Signale unter Verwendung mindestens einer Wellenlänge (λ1-λ4) übertragen werden, von denen mindestens eine auf einer Überwachungsstrecke zu überwachen ist, umfassend:
- eine erste Auskoppeleinrichtung (1) zum Auskoppeln von Bruchteilen der Signale mit den zu überwachenden Wellenlängen (λ1-λ4) aus der analogen Leitung (OL),
- einen Generator (2) zum Erzeugen eines Überwachungssignals mit einer zusätzlichen Wellenlänge (λ5) aus den Intensitäten der ausgekoppelten Bruchteilen der Signale,
- eine Einkoppeleinrichtung (3) zum Einkoppeln des erzeugten Überwachungssignals in die analoge Leitung (OL),
- eine zweite Auskoppeleinrichtung (4,5) zum Auskoppeln von Bruchteilen der Signale mit den zu überwachenden Wellenlängen (λ1-λ4) sowie mindestens eines Bruchteils des Überwachungssignals aus der analoge Leitung (OL) an einem Überwachungspunkt und
- eine Auswerteeinheit (6) zum Auswerten der am Überwachungspunkt ausgekoppelten Signale bezüglich einer Änderung zwischen der Summe der Intensitäten der Signale mit den zu überwachenden Wellenlängen (λ1-λ4) am Anfangspunkt der Überwachungsstrecke und an dem mindestens einen Überwachungspunkt.

8. Überwachungsvorrichtung nach Anspruch 7,
**dadurch gekennzeichnet,**
**daß** die analogen Leitungen optische Leitungen eines Telekommunikationsnetzwerkes sind und daß die Auskoppeleinrichtungen (1,4,5) und die Einkoppeleinrichtung (3) integriert sind in optischen Knoten des Telekommunikationsnetzwerkes.

9. Überwachungsvorrichtung nach einem der Ansprüche 7-8,
**dadurch gekennzeichnet,**
**daß** die analogen Leitungen optische Leitungen eines Telekommunikationsnetzwerkes sind und daß der Generator (2) des Überwachungssignals und die Auswerteeinheit (6) integriert sind in optischen Knoten des Telekommunikationsnetzwerkes.

10. Überwachungsvorrichtung nach einem der Ansprüche 7-9,
**dadurch gekennzeichnet,**
**daß** Verzögerungselemente, die für eine Kompensation der Verarbeitungszeit in dem Generator (2) geeignet sind, die an dem Überwachungspunkt ausgekoppelten Signale der zu überwachenden Wellenlängen (λ1-λ4) vor ihrer Verwendung zur Auswertung in der Auswerteeinheit (6) verzögern.

11. Überwachungsvorrichtung nach einem der Ansprüche 7-10,
**dadurch gekennzeichnet,**
**daß** die Auswerteeinheit (6) mit einer Benachrichtigungseinheit verbunden ist zum Ausgeben einer Information im Falle einer bei der Auswertung detektierten relevante Abweichung der Summen.

12. Überwachungsvorrichtung nach einem der Ansprüche 7-11,
**gekennzeichnet durch**
eine Vielzahl von Generatoren und Auswerteeinheiten, von denen jeweils ein Generator und eine Auswerteeinheit einer Gruppe von Wellenlängen zugeordnet wird.

## Revendications

1. Méthode de contrôle de la qualité de la transmission de données sur des lignes analogiques, en particulier des lignes optiques (LO), les données étant transmises sous forme de signaux en utilisant au moins une longueur d'ondes (λ1- λ4) et au moins une longueur d'ondes (λ1- λ4) à contrôler sur un chemin de contrôle, ladite méthode comprenant les étapes suivantes :
- découplage (1) d'une fraction des signaux de chacune des longueurs d'ondes (λ1- λ4) à contrôler au point de départ d'un chemin de contrôle ;
- formation (2) d'un signal de contrôle qui illustre la somme des intensités des signaux découplés ;
- transmission (3) du signal de contrôle formé avec une longueur d'ondes supplémentaire (λ5) ;
- à au moins un point de contrôle du chemin de contrôle prévu à cet effet, découplage répété (4) d'une fraction des signaux avec les longueurs d'ondes (λ1- λ4) à contrôler ainsi que découplage (5) d'au moins une fraction du signal de contrôle; et
- évaluation (6) des signaux découplés au point de contrôle en ce qui concerne tout changement entre la somme des intensités des signaux avec les longueurs d'ondes (λ1- λ4) à contrôler, au point de départ du chemin de contrôle et au point de contrôle, dont il y en a au moins un.

2. Méthode selon la revendication 1,
**caractérisée en ce que**
le signal de contrôle est formé de manière à ce qu'il soit égal-ou proportionnel à la somme (Óp*I_{S}) des intensités des fractions découplées des signaux avec les longueurs d'ondes (λ1- λ4) à contrôler et qu'il est, pour l'évaluation, contrôlé dans quelle mesure le signal de contrôle qui est transmis sur une longueur d'onde supplémentaire (λ5) soit égal ou proportionnel à une somme, formée au point de contrôle, des intensités de fraction des signaux, découplées à ce point, avec les longueurs d'ondes (λ1- λ4) à contrôler.

3. Méthode selon la revendication 1,
**caractérisée en ce que**
le signal de contrôle est formé à partir du complément (Iₖ) en relation avec une valeur spécifiée (C) par rapport à la somme (Óp*Iₛ) des intensités des fractions découplées des signaux avec les longueurs d'ondes (λ1- λ4) à contrôler, et qu'il est, pour l'évaluation, contrôlé dans quelle mesure la somme de l'intensité du signal de contrôle qui, au point de contrôle, est découplé au moins en fraction et des intensités des fractions, découplées au point de contrôle, des signaux avec les longueurs d'ondes (λ1- λ4) à contrôler, soit constante.

4. Méthode selon l'une quelconque des revendications précédentes,
**caractérisée en ce que**
les signaux transmis sur la ligne analogique (LO) sont amplifiés après une réduction de l'intensité par des fractions.

5. Méthode selon l'une quelconque des revendications précédentes,
**caractérisée en ce que**
les longueurs d'ondes à contrôler sont divisées en groupes, un signal de contrôle propre étant formé pour chaque groupe, ledit signal de contrôle étant, pour l'évaluation à un point de contrôle, transmis sur une longueur d'ondes séparée.

6. Méthode selon l'une quelconque des revendications précédentes,
**caractérisée en ce que**
une notification a lieu si une déviation significative est détectée pendant l'évaluation.

7. Dispositif de contrôle de la qualité de la transmission de données sur des lignes analogiques, en particulier des lignes optiques (LO) composées de câbles en fibres optiques, les données étant transmises sous la forme de signaux via lesdites lignes analogiques en utilisant au moins une longueur d'ondes (λ1- λ4) et avec au moins une longueur d'ondes à contrôler sur un chemin de contrôle, comprenant
- un premier dispositif de découplage (1) pour découpler des fractions des signaux avec les longueurs d'ondes (λ1- λ4) à contrôler de la ligne analogique (LO) ;
- un générateur (2) pour générer un signal de contrôle avec une longueur d'ondes supplémentaire (λ5) à partir des intensités des fractions découplées des signaux ;
- un dispositif de couplage (3) pour coupler le signal de contrôle généré à la ligne analogique (LO) ;
- un second dispositif de découplage (4, 5) pour découpler des fractions des signaux avec les longueurs d'ondes (λ1- λ4) à contrôler, ainsi qu'au moins une fraction du signal de contrôle, de la ligne analogique (LO) à un point de contrôle ; et
- une unité d'évaluation (6) pour évaluer les signaux découplés au point de contrôle en ce qui concerne tout changement entre la somme des intensités des signaux avec les longueurs d'ondes (λ1- λ4) à contrôler, au point de départ du chemin de contrôle et au point de contrôle, dont il y en a au moins un.

8. Dispositif de contrôle selon la revendication 7,
**caractérisé en ce que**
les lignes analogiques sont des lignes optiques dans un réseau de télécommunications et que les dispositifs de découplage (1, 4, 5) et le dispositif de couplage (3) sont intégrés dans des nodules optiques du réseau de télécommunications.

9. Dispositif de contrôle selon l'une quelconque des revendications 7 ou 8,
**caractérisé en ce que**
les lignes analogiques sont des lignes optiques d'un réseau de télécommunications et que le générateur (2) du signal de contrôle et l'unité d'évaluation (6) sont intégrés dans des nodules optiques du réseau de télécommunications.

10. Dispositif de contrôle selon l'une quelconque des revendications 7 à 9,
**caractérisé en ce que**
des éléments de retardement qui sont aptes à compenser le temps de traitement dans le générateur (2) retardent les signaux des longueurs d'ondes (λ1-λ4) à contrôler, lesquels signaux sont découplés au point de contrôle, avant d'être utilisés pour l'évaluation dans l'unité d'évaluation (6).

11. Dispositif de contrôle selon l'une quelconque des revendications 7 à 10,
**caractérisé en ce que**
l'unité d'évaluation (6) est connectée à une unité de notification pour émettre des informations dans les cas où une déviation significative des sommes est détectée pendant l'évaluation.

12. Dispositif de contrôle selon l'une quelconque des revendications 7 à 11,
**caractérisé par**
un nombre multiple de générateurs et d'unités d'évaluation, dont un générateur et une unité d'évaluation est chacun associé à un groupe de longueurs d'ondes.
